# EUROPEAN PATENT SPECIFICATION

(11) **EP 4 303 073 B1**
(45) Date of publication and mention of the grant of the patent: **18.03.2026**
(21) Application number: 23183206.4
(22) Date of filing: 04.07.2023
(51) Int. Cl.: B60P 1/16, B60P 1/26, B62D 33/03

(54) **CONTAINMENT SYSTEM FOR PANEL OF A COMMERCIAL VEHICLE BOX**
EINDÄMMUNGSSYSTEM FÜR PANEEL EINES NUTZFAHRZEUGKASTENS
SYSTÈME DE CONFINEMENT POUR PANNEAU DE COFFRE DE VÉHICULE UTILITAIRE

(30) Priority: 05.07.2022 IT 202200014230
(43) Date of publication of application: 10.01.2024
(73) Proprietor: IVECO S.P.A., 10156 Torino (IT)
(72) Inventor: BELLOSTA, Claudio, 10156 TORINO (IT); LOVERA, Ezio, 10156 TORINO (IT)
(74) Representative: Studio Torta S.p.A.

(56) References cited:
- DE-U1- 202020 104 305
- US-A- 6 048 018
- US-A1- 2006 232 121
- US-A1- 2020 102 025

## Description

### TECHNICAL FIELD

The present invention relates to a containment system for a panel of a vehicle.

The present invention is preferably, although not exclusively, applied to the containment of a panel of a commercial vehicle box. In the following, reference will be made to such application by way of example.

### STATE OF THE PRIOR ART

Regulations R151, R158, R159 provide for vehicles to be equipped with devices configured to signal the presence of people and/or obstacles in the proximity of the vehicle, in order to prevent dangerous accidents.

Such devices, known as "ADAS", Advanced Driver Assistance Systems, comprise sensors, such as for example RADAR, LIDAR, or cameras, placed along at least part of the perimeter of the vehicle.

Normally, such devices are carried by portions integral with the chassis placed below the vehicular plane. Should the vehicle be provided with a box, this arrangement becomes critical.

In fact, the boxes define a space configured to house goods delimited by a platform carried by the chassis and by a plurality of panels.

Such panels are normally hinged with respect to the platform so as to enable the opening thereof for easily accessing the aforementioned space for putting or collecting goods.

Furthermore, the boxes are connected to the chassis so as to enable the overturning on one of the lateral or rear sides so as to facilitate the unloading of the goods from the aforementioned space.

Both in a standard configuration and in an overturned configuration, it is possible for the side panel to knock against the chassis, i.e. below the platform to which it is hinged.

If in the traditional vehicles such problem is felt but causes outcomes which are not very serious, in the vehicles equipped with ADAS systems the collision of the panel could damage the aforementioned sensor means.

The damaging of the sensor means, besides not allowing driving the vehicle because it would not be compliant with the aforementioned rules, is also source of economic damage given the cost of such sensors.

Examples of known systems are disclosed US6048018 A1, US2006/232121 A1, US2020/102025 A1 or DE202020104305 U1.

Therefore, the need is felt to allow having versatile boxes which allow loading/unloading goods without however risking ruining the ADAS sensors of the vehicle.

The object of the present invention is to satisfy the aforementioned needs in an optimized and cost-effective manner.

### SUMMARY OF THE INVENTION

The aforementioned object is achieved by a box and a vehicle provided with a box as claimed in the appended claims.

### BRIEF DESCRIPTION OF THE DRAWINGS

In order to better understand the present invention, a preferred embodiment is described in the following, by way of non-limiting example and with reference to the accompanying drawings wherein:
- Figure 1 is a side view of a vehicle comprising a box according to the invention;
- Figure 2 is a rear view of the vehicle of Figure 1;
- Figure 3 is a top view of the vehicle of Figure 1;
- Figure 4 is a schematic view, with parts removed for clarity and partly sectioned, of a rear view of the vehicle of Figure 1 in a first operating condition;
- Figure 5 is a schematic view, with parts removed for clarity and partly sectioned, of a rear view of the vehicle of Figure 1 in a second operating condition;
- Figure 6 is a schematic side view of a system of the box according to the invention;
- Figure 7 is a section view of a portion of the system of Figure 6 along line VII-VII;
- Figure 8 is a section view of a portion of the system of Figure 6 along line VIII-VIII;
- Figure 9 is a view according to a portion of the system of Figure 6 according to directrix IX of Figure 8; and
- Figures 10a-10d illustrate different schematic side views of a system of the box in different operation configurations.

### DETAILED DESCRIPTION OF THE INVENTION

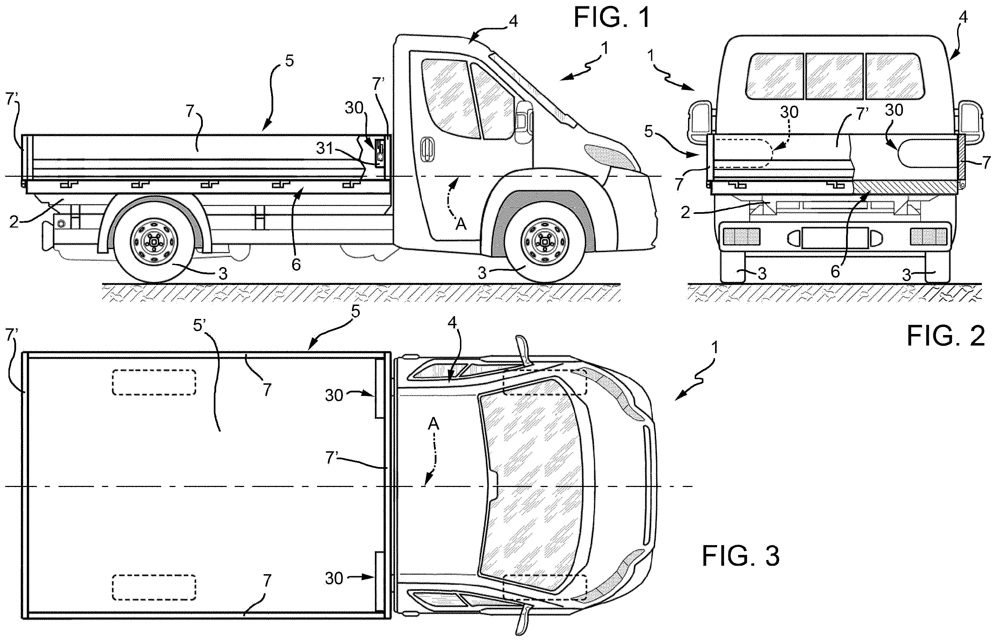

In Figures 1 to 3, a vehicle 1 of commercial type is illustrated. In particular, the vehicle 1 comprises a chassis 2 extending along an axis A and moving with respect to the ground G by means of a plurality of wheels 3.

Without going into further details, the vehicle 1 can be provided with sensor means (not illustrated) configured to detect obstacles in the proximity of the vehicle 1 and carried on at least part of the perimeter of the chassis 2. Since such sensor means are known, they will not be further described for the sake of brevity.

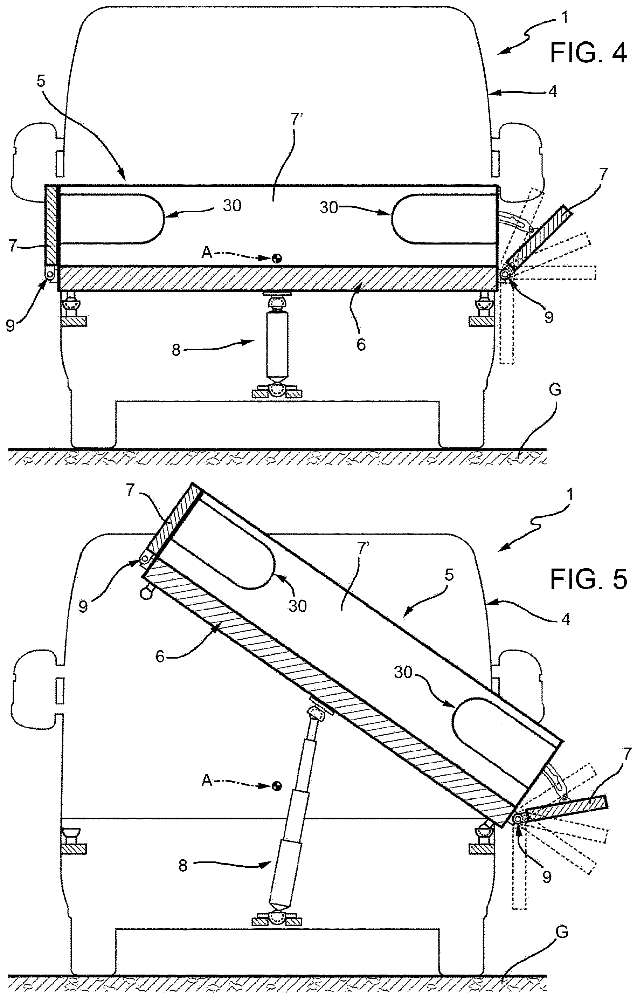

The vehicle 1 comprises a driving cab 4 and a box 5 carried by the chassis 1. As is better visible in Figures 4 and 5, the box 5 essentially comprises a platform 6 and a plurality of panels 7, 7' extending from the platform 6 on the opposite side with respect to the ground G.

The platform 6 and the plurality of panels 7, 7' delimit between each other a space 5' configured to house goods. In particular, the panels comprise a pair of side panels 7 and a front and rear panel 7', as known per se.

The box 5, in particular the platform 6, is carried by the chassis 2 so that it can be overturned with respect to the longitudinal sides of the chassis 1, i.e. around a hinge axis parallel to the axis A or with respect to the rear side of the chassis 1, i.e. around a hinge axis transversal to the axis A.

In particular, in order to be carried in the overturning manner on three sides as above-described, the vehicle 1 comprises actuating means 8 not further described for the sake of brevity and schematized in the accompanying drawings.

As known per se, the panels 7, 7' are carried by the platform 6 in a movable manner, advantageously by means of one or more hinges 9 configured to enable the rotation of the bottom end portion of the panel 7, 7' with respect to the outer edge of the platform 6, thus around an axis of rotation parallel or transversal to the longitudinal axis A of the vehicle 1.

The box 5 can also comprise locking means, not illustrated, configured to allow or not allow the movement of the panel 7, 7' around the hinge 9, therefore to maintain the panel 7, 7' in a first condition in which it is fixed with respect to the platform 6 and a second condition in which it is movable with respect to it.

According to the invention, the box 1 comprises a containment system 10 for limiting the stroke of one of the panels 7, 7', in particular of the side panel 7, in at least one predefined angular position around the hinge 9 so as to prevent such panel from contacting the chassis 2 of the vehicle.

In particular, the containment system 10 comprises a pin 11 and a guide 12 configured to define a seat 13 configured to be occupied by the pin 11 in a sliding manner therein.

In particular, the guide 12 is carried by the side panel 7 on a first side, is free on a second side and cooperates in contact with the pin 11 in the seat 13. Advantageously the guide 12 has a curvilinear shape, preferably with the concavity facing towards the platform 6.

In particular, the seat 13 is defined by one single opening in the guide 12 and comprises a pair of upper and lower edges and by a pair of side edges. Preferably, the guide 12 has a substantially flat shape with a constant section, therefore the seat 13 has a same extension along the entire length of the seat 12.

In particular, the upper edge of the seat 13 defines a profile 13a provided with a plurality of recesses 13' configured to house in contact the pin 11.

Specifically, the recesses 13' are lowered with respect to the level of the profile 13a and have a substantially triangular shape. Consequently, they comprise a first side 13a' and a second side 13b' defining different inclinations with respect to the level of the profile 13a; the third side of the substantially triangular shape is open towards the seat 13.

Specifically, the inclination of the first side 13a' is such that the pin 11, cooperating in contact with such first side 13a' remains locked preventing a passing over thereof until a force exerted on the guide 12 in the direction of the first side 13a' is less than a predetermined value. On the other hand, the inclination of the second side 13b' is such that the pin 11 slides in contact on it for returning on the profile 13a if a force is applied on the guide 12 in the direction of the second side 13b'.

The pin 11 is advantageously carried in an integral manner by the platform 6, for example by an angle element (not visible) placed between front panel 7' and side panel 7 or by the front panel 7', as is illustrated in the described embodiment.

Advantageously, several pins 11, 11' can be provided configured to define different strokes of the side panel 7. In particular, in the illustrated embodiment, two pins 11, 11' are illustrated placed in different positions with respect to the platform 6, in particular different height and distance from the longitudinal axis A.

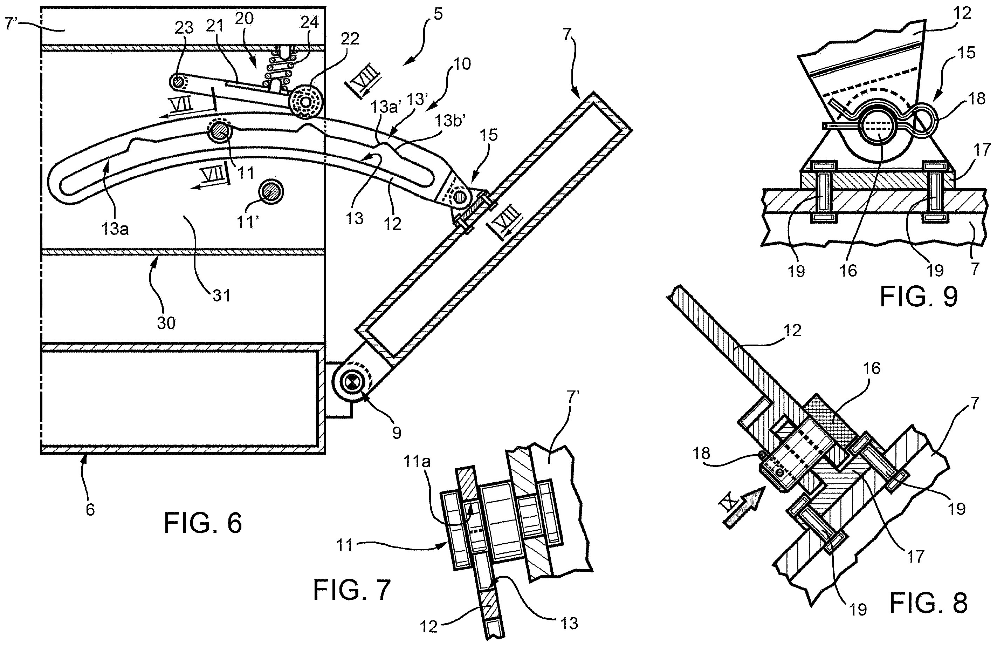

As is visible in Figure 7, and as aforementioned, the guide 12 has a substantially flat shape and the pin 11 defines a seat 11a having a length such to cooperate slidingly with the walls of the guide 12. The pin 11 can be fixed by means of threaded elements, such as a ring nut or a screw nut, on the opposite side of an opening made on the front panel 7', or on the angular support element, as is illustrated by way of example.

It is highlighted that the seat 13 has an extension which is greater than the diameter of the pin 11 so that, if necessary, it is possible to extract the guide 12 from the pin 11 extracting it from the seat 11a and moving the guide radially with respect to the pin 11 up to extracting it.

With regard to the end of the guide 12 carried by the side panel 7, it is advantageously fixed by means of a movable connection, preferably a hinge 15.

As is better illustrated in Figures 8 and 9, the hinge 15 is made by means of a pin 16 carried between a portion 17 integral with the side panel 7 and the end portion of the guide 12.

In particular, the pin 16 is made selectively integral with one between portion 17 and guide 12 by means of removable fixing means such as a fork 18. The portion 17 is fixed to the side panel 7 by means of removable fixing means such as threaded elements 19.

Advantageously, the containment system 10 can be contained inside a carcass 30 configured to prevent the goods transported in the space 5' from interfering between guide 12 and pin 11.

In particular, the carcass 30 defines a space 31 configured to house the pin 11 and at least the entire length of the guide 12 in the position in which the side panel 7 is in standard closed position.

Should the sole weight of the guide 12, by means of the sole force of gravity, not be sufficient for assuring the contact between the guide 12 and the pin 11, the containment system 10 can also be equipped with a tensioning system 20 configured to assure the contact between pin 11 and guide 12.

Preferably, such tensioning system 20 can comprise an arm 21 equipped with a pulley 22 placed in contact with the guide 12 and carried rotationally free by the arm 21. The arm 21 is advantageously hinged with respect to the front wall 7' or to the aforementioned angle portion by means of a hinge 23. The tensioning system 20 can also comprise elastic means 24 interposed between the support of the hinge 23 and the arm 21 and configured to provide a force configured to assure the aforementioned contact.

The operation of the embodiment of the containment system for a box panel according to the invention as described above is as follows.

As mentioned, the vehicle 1 comprises actuating means 8 which can bring the box 5 in one of the two conditions of Figures 4 and 5, i.e. in a standard condition in which the platform is parallel to the ground G and an overturned condition in which the platform is inclined with respect to the ground G.

If necessary, the driver can unlock the movement of the side panel 7 so that it can overturn around the axis of the hinge 9.

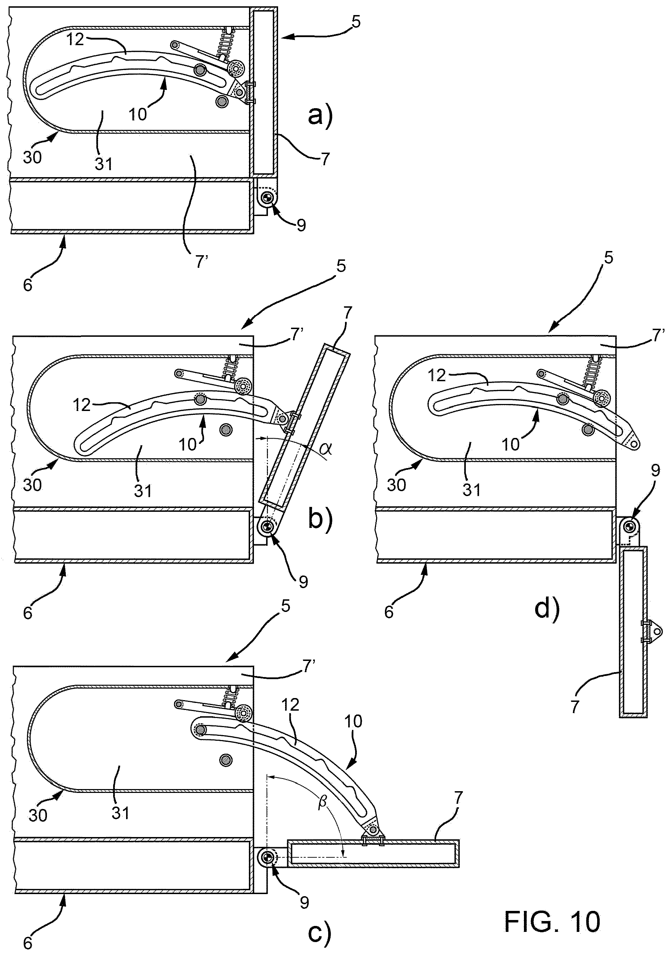

In standard position or overturned position, unless there is an action by the driver, the guide 12 is integral with the pin 11 since, without a force configured to move it from the recess 13', it cannot allow the movement of the guide 12, therefore the movement of the side panel 7. Such condition is represented in Figure 10a where a first operating condition is illustrated.

The driver can thus act unlocking the movement of the guide 12, exerting a suitable force, so that the side panel 7 can open by an angle α corresponding to the position of the recess 13', as is illustrated in Figure 10b. The side panel 7 will thus be handled depending on the need, up to reaching a maximum opening angle β, illustrated for example in Figure 10c.

The operation in contrary manner, i.e. closing, is similar. The driver in such case has to only bring the side panel 7 back in the initial position of Figure 10a. During such operation, thanks to the shape of the recesses 13', the sliding of the pin 11 in the guide 12 is facilitated.

In the case where the panel 7 is maintained open during the return step of the box 5 in standard position, the weight force will tend to make the pins slide towards the second portion 13b' thus bringing into automatic closing the side panel 7 in the initial position of Figure 10a.

During the movement of the guide 12, the carcass 30 protects the mechanism between guide 12 and pin 11 from the interposition of the goods placed in the space 5'.

Furthermore, if present, the tensioning system 20 maintains the contact between pin 11 and guide 12 during the movement of the latter with respect to the pin 11.

If necessary, the driver can either unhook the guide 12 from the pin 11 or disengage the pin 16 and thus the guide 12 from the side panel 7 making the total unhooking of the side panel 7 free.

Based on the foregoing, the advantages of the containment system for a box panel according to the invention are evident.

Thanks to the proposed containment system also during the opening of the panel of the box, desired or undesired, the contact between it and the chassis is prevented, preventing the damaging of the sensor means with which it is provided.

Furthermore, thanks to the fact that a seat is present defining several recesses, it is possible to handle the panel according to different maximum opening angles.

The proposed system is further compact, cost-effective and can be easily integrated in existing systems.

Furthermore, thanks to the fact that the recesses in the seat have two different inclinations depending on the stroke direction of the panel, it allows obtaining an automatic closing of the same if the box returns in standard position from overturned position or facilitating the closing in standard position.

Furthermore, the presence of a carcass for separating the rest of the space of the box allows preventing dirt or other elements from damaging the mechanism of the containment system.

Still, the fact that it is possible to unhook only one end or both ends of the guide from the pin allows an easy maintenance or removal of the guide.

Furthermore, the presence of the tensioning system allows a constant contact between guide and pin also in conditions of vibrations of the vehicle.

Finally, it is clear that modifications and variations can be made to the containment system for a box panel according to the present invention, which do not anyway depart from the scope of protection defined by the claims.

Clearly, although the containment system is described only for containing a side panel with respect to a front panel, it can also be provided for containing the side panel with respect to the platform 6 or to an angular element or, vice versa, for containing a front or rear panel with respect to a side panel.

Still, the guide or the pin can be made differently with regard to number and shape, as well as the recesses in the guide.

Furthermore, the carcass configured to contain the containment system and the tensioning system could not be present or made in a different manner.

## Claims

1. Box (5) for a vehicle (1), comprising a platform (6) configured to be carried by a chassis (2) of said vehicle and extending along a longitudinal axis (A), a pair of side panels (7) parallel to said axis (A), a pair of front and rear panels (7') transversal to said axis (A), said panels (7', 7") and said platform (6) delimiting a space (5') adapted to transport goods, said panels (7', 7") being carried by said platform (6) by means of at least one hinge (9) configured to allow the rotation of an edge of said panels (7, 7') around a hinge axis respectively parallel or transversal to said axis (A), said box (5) comprising a containment system (10) configured to limit the stroke of said panel (7, 7') in at least one predefined angular position around said axis of rotation of said hinge (9),
wherein said containment system (10) comprises a pin (11) rigidly carried by a portion (7') integral with said platform (6) and a guide (12) carried by said panel (7), said guide defining a seat (13) within which said pin (11) is housed, said seat (13) defining a profile (13a) configured to cooperate slidingly with said pin (11), wherein said profile (13a) defining a plurality of recesses (13') lowered with respect to said profile (13a) and configured to partially house said pin (11), said recesses (13') each corresponding to different predefined angular positions of said panel (7), **characterized in that** said recesses (13') comprise a first side (13a') and a second side (13b') having a different inclination with respect to the level of said profile (13a),
wherein said first side (13a') is configured to maintain said pin (11) in said recess (13') if a force applied to said guide (12) in the direction of said first side (13a') is less than a predetermined force and in which said second side (13b') is configured to allow the sliding of said pin (11) if a force is applied to said guide (12) in the direction of said second side (13b').

2. Box according to claim 1, wherein said guide (12) has a curved shape, the concavity of said curved shape facing towards said platform (6).

3. Box according to claim 1 or 2, comprising several pins (11, 11') placed in different positions with respect to said platform (6).

4. Box according to any of claims 1 to 3, wherein the extension of said seat (13) is greater than the diameter of said pin (11) so as to be able to remove said pin (11) from said seat (13).

5. Box according to any of the preceding claims, wherein said guide (12) is connected to said panel (7) by means of a hinge mechanism (15).

6. Box according to claim 5, wherein a pin (16) of said hinge mechanism (15) is selectively removable to uncouple said guide (12) from said panel (7).

7. Box according to one of the preceding claims, wherein said box (5) comprises a carcass (30) integral with said platform (6) and defining a space (31) configured to house said containment system (10).

8. Box according to one of the preceding claims, wherein said containment system (10) is housed in said space (5').

9. Box according to one of the preceding claims, comprising a tensioning system (20) configured to exert a force configured to maintain said guide (12) in contact with said pin (11).

10. Vehicle (1) comprising a chassis (2) movable with respect to the ground (G) and a box (5) according to one of the preceding claims carried by said chassis (2).

11. Vehicle according to claim 10, wherein said vehicle comprises actuating means (8) configured to overturn said box (5) longitudinally and/or transversely with respect to said axis (A) of said vehicle.

## Patentansprüche

1. Kasten (5) für ein Fahrzeug (1), umfassend eine Plattform (6), die konfiguriert ist, um von einem Fahrgestell (2) des Fahrzeugs getragen zu werden, und sich entlang einer Längsachse (A) erstreckt, ein Paar von Seitenplatten (7) parallel zu der Achse (A), ein Paar von vorderen und hinteren Platten (7') quer zu der Achse (A), wobei die Platten (7', 7") und die Plattform (6) einen Raum (5') begrenzen, der angepasst ist, um Waren zu transportieren, wobei die Platten (7', 7") von der Plattform (6) mittels mindestens eines Scharniers (9) getragen werden, das konfiguriert ist, um die Drehung einer Kante der Platten (7, 7') um eine Scharnierachse jeweils parallel oder quer zu der Achse (A) zu ermöglichen, wobei der Kasten (5) ein Begrenzungssystem (10) umfasst, das konfiguriert ist, um den Hub der Platte (7, 7') in mindestens einer vordefinierten Winkelposition um die Drehachse des Scharniers (9) zu begrenzen,
wobei das Begrenzungssystem (10) einen Stift (11), der starr von einem Abschnitt (7') getragen wird, der integral mit der Plattform (6) ist, und eine Führung (12), die von der Platte (7) getragen wird, umfasst, wobei die Führung einen Sitz (13) definiert, in dem der Stift (11) untergebracht ist, wobei der Sitz (13) ein Profil (13a) definiert, das konfiguriert ist, um gleitend mit dem Stift (11) zusammenzuwirken, wobei das Profil (13a) eine Vielzahl von Vertiefungen (13') definiert, die in Bezug auf das Profil (13a) abgesenkt und konfiguriert sind, um den Stift (11) teilweise aufzunehmen, wobei die Vertiefungen (13') jeweils unterschiedlichen vordefinierten Winkelpositionen der Platte (7) entsprechen, **dadurch gekennzeichnet, dass** die Vertiefungen (13') eine erste Seite (13a') und eine zweite Seite (13b') umfassen, die eine unterschiedliche Neigung in Bezug auf das Niveau des Profils (13a) aufweisen,
wobei die erste Seite (13a') konfiguriert ist, um den Stift (11) in der Vertiefung (13') zu halten, wenn eine Kraft, die auf die Führung (12) in der Richtung der ersten Seite (13a') ausgeübt wird, geringer als eine vorbestimmte Kraft ist, und wobei die zweite Seite (13b') konfiguriert ist, um das Gleiten des Stifts (11) zu ermöglichen, wenn eine Kraft auf die Führung (12) in der Richtung der zweiten Seite (13b') ausgeübt wird.

2. Kasten nach Anspruch 1, wobei die Führung (12) eine gekrümmte Form aufweist, wobei die Konkavität der gekrümmten Form der Plattform (6) zugewandt ist.

3. Kasten nach Anspruch 1 oder 2, umfassend mehrere Stifte (11, 11'), die in unterschiedlichen Positionen in Bezug auf die Plattform (6) platziert sind.

4. Kasten nach einem der Ansprüche 1 bis 3, wobei die Verlängerung des Sitzes (13) größer als der Durchmesser des Stifts (11) ist, um in der Lage zu sein, den Stift (11) von dem Sitz (13) zu entfernen.

5. Kasten nach einem der vorhergehenden Ansprüche, wobei die Führung (12) mittels eines Scharniermechanismus (15) mit der Platte (7) verbunden ist.

6. Kasten nach Anspruch 5, wobei ein Stift (16) des Scharniermechanismus (15) selektiv entfernbar ist, um die Führung (12) von der Platte (7) zu entkoppeln.

7. Kasten nach einem der vorhergehenden Ansprüche, wobei der Kasten (5) eine Karkasse (30) umfasst, die integral mit der Plattform (6) ist und einen Raum (31) definiert, der konfiguriert ist, um das Begrenzungssystem (10) aufzunehmen.

8. Kasten nach einem der vorhergehenden Ansprüche, wobei das Begrenzungssystem (10) in dem Raum (5') aufgenommen ist.

9. Kasten nach einem der vorhergehenden Ansprüche, umfassend ein Spannsystem (20), das konfiguriert ist, um eine Kraft auszuüben, die konfiguriert ist, um die Führung (12) in Kontakt mit dem Stift (11) zu halten.

10. Fahrzeug (1), umfassend ein Fahrgestell (2), das in Bezug auf den Boden (G) beweglich ist, und einen Kasten (5) nach einem der vorhergehenden Ansprüche, der von dem Fahrgestell (2) getragen wird.

11. Fahrzeug nach Anspruch 10, wobei das Fahrzeug Betätigungsmittel (8) umfasst, die konfiguriert sind, um den Kasten (5) längs und/oder quer in Bezug auf die Achse (A) des Fahrzeugs zu kippen.

## Revendications

1. Caisse (5) pour un véhicule (1), comprenant une plateforme (6) configurée pour être portée par un châssis (2) dudit véhicule et s'étendant le long d'un axe longitudinal (A), une paire de panneaux latéraux (7) parallèles audit axe (A), une paire de panneaux avant et arrière (7') transversaux audit axe (A), lesdits panneaux (7', 7") et ladite plateforme (6) délimitant un espace (5') adapté au transport de marchandises, lesdits panneaux (7', 7") étant portés par ladite plateforme (6) au moyen d'au moins une charnière (9) configurée pour permettre la rotation d'un bord desdits panneaux (7, 7') autour d'un axe de charnière respectivement parallèle ou transversal audit axe (A), ladite caisse (5) comprenant un système de confinement (10) configuré pour limiter la course dudit panneau (7, 7') dans au moins une position angulaire prédéfinie autour dudit axe de rotation de ladite charnière (9),
dans laquelle ledit système de confinement (10) comprend une goupille (11) portée de manière rigide par une partie (7') solidaire de ladite plateforme (6) et un guide (12) porté par ledit panneau (7), ledit guide définissant un siège (13) à l'intérieur duquel est logée ladite goupille (11), ledit siège (13) définissant un profil (13a) configuré pour coopérer de manière coulissante avec ladite goupille (11), dans laquelle ledit profil (13a) définit une pluralité d'évidements (13') abaissés par rapport audit profil (13a) et configurés pour loger partiellement ladite goupille (11), lesdits évidements (13') correspondant chacun à différentes positions angulaires prédéfinies dudit panneau (7), **caractérisée en ce que** lesdits évidements (13') comprennent un premier côté (13a') et un deuxième côté (13b') ayant une inclinaison différente par rapport au niveau dudit profil (13a),
dans laquelle ledit premier côté (13a') est configuré pour maintenir ladite goupille (11) dans ledit évidement (13') si une force appliquée audit guide (12) dans la direction dudit premier côté (13a') est inférieure à une force prédéterminée et dans laquelle ledit deuxième côté (13b') est configuré pour permettre le coulissement de ladite goupille (11) si une force est appliquée audit guide (12) dans la direction dudit deuxième côté (13b').

2. Caisse selon la revendication 1, dans laquelle ledit guide (12) présente une forme incurvée, la concavité de ladite forme incurvée étant orientée vers ladite plateforme (6).

3. Caisse selon la revendication 1 ou 2, comprenant plusieurs goupilles (11, 11') placées dans différentes positions par rapport à ladite plateforme (6).

4. Caisse selon l'une quelconque des revendications 1 à 3, dans laquelle l'extension dudit siège (13) est supérieure au diamètre de ladite goupille (11) de façon à pouvoir retirer ladite goupille (11) dudit siège (13).

5. Caisse selon l'une quelconque des revendications précédentes, dans laquelle ledit guide (12) est relié audit panneau (7) au moyen d'un mécanisme articulé (15).

6. Caisse selon la revendication 5, dans laquelle une goupille (16) dudit mécanisme articulé (15) est sélectivement amovible pour désaccoupler ledit guide (12) dudit panneau (7).

7. Caisse selon l'une des revendications précédentes, dans laquelle ladite caisse (5) comprend une carcasse (30) solidaire de ladite plateforme (6) et définissant un espace (31) configuré pour loger ledit système de confinement (10).

8. Caisse selon l'une des revendications précédentes, dans laquelle ledit système de confinement (10) est logé dans ledit espace (5').

9. Caisse selon l'une des revendications précédentes, comprenant un système de tension (20) configuré pour exercer une force configurée pour maintenir ledit guide (12) en contact avec ladite goupille (11).

10. Véhicule (1) comprenant un châssis (2) mobile par rapport au sol (G) et une caisse (5) selon l'une des revendications précédentes portée par ledit châssis (2).

11. Véhicule selon la revendication 10, dans lequel ledit véhicule comprend des moyens d'actionnement (8) configurés pour retourner ladite caisse (5) longitudinalement et/ou transversalement par rapport audit axe (A) dudit véhicule.
